## Europäisches Patentamt

## European Patent Office

## Office européen des brevets

(11) Numéro de publication: **0 027 084**
**A1**

# DEMANDE DE BREVET EUROPEEN

(21) Numéro de dépôt: **80401403.3**

(22) Date de dépôt: **03.10.80**

(51) Int. Cl.³: **B 23 P 1/12**

(30) Priorité: **04.10.79 FR 7924732**

(71) Demandeur: **LANGUEPIN S.A. Société Anonyme, 55 rue d'Amsterdam, F-75008 Paris (FR)**

(43) Date de publication de la demande: **15.04.81 Bulletin 81/15**

(72) Inventeur: **Carbon, Claude, 132 bis rue Jules Ferry, F-95380 Montmagny (FR)**

(84) Etats contractants désignés: **AT BE CH DE GB IT LI LU NL SE**

(74) Mandataire: **Bouju, André, Cabinet Bouju 38 avenue de la Grande Armée, F-75017 Paris (FR)**

(54) **Dispositif d'usinage par électro-érosion.**

(57) Le dispositif d'usinage par électro-érosion 1 est destiné à être monté entre une machine et une électrode d'usinage. Il est constitué d'au moins deux parties 2, 4 mobiles en translation latérale l'une par rapport à l'autre au moyen d'un système vis-écrou 6.

Chacune des deux parties 2, 4 comprend un plateau 16 ou 17 et un chariot 14 ou 15 orientable angulairement par rapport au plateau 16 ou 17 correspondant. Chaque plateau 16 ou 17 est fixé respectivement à l'électrode 3 et à une tête d'usinage 5. Les chariots 14, 15 sont solidaires respectivement de l'écrou et de la vis 6.

Application en particulier à l'usinage par électro-érosion d'empreintes complexes à l'aide d'électrodes simples.

0027084

La présente invention concerne un dispositif d'usinage par électro-érosion, destiné à être monté entre un support d'une machine et une électrode d'usinage porté par ce support. Ce support est, le plus souvent, une tête d'usinage.

On sait que l'usinage d'une empreinte dans une pièce par électro-érosion consiste généralement à effectuer une première opération de défonçage par laquelle on enfonce progressivement l'électrode dans un bloc de métal. L'opération de finition, à régime électrique progressivement décroissant, peut s'effectuer en utilisant successivement plusieurs électrodes de plus en plus grosses, s'approchant de plus en plus de la paroi de l'empreinte, ou, de préférence en animant l'électrode d'origine d'un mouvement latéral, notamment de translation circulaire.

L'inconvénient du procédé de la translation circulaire est que, s'agissant d'une électrode prismatique, il arrondit les angles de l'empreinte. Si l'on veut obtenir des angles vifs, il convient donc de revenir au procédé des électrodes successives, long et coûteux.

On pourrait également envisager d'utiliser , pour la finition, une table X-Y qui permettrait de donner à l'électrode le mouvement latéral précité, puis de donner un mouvement rectiligne d'avance latérale en direction du sommet de l'angle à aviver.

Toutefois, une telle table constitue un appareil complexe et coûteux. En outre, elle présente l'inconvénient de toujours laisser l'électrode parallèle à elle-même, de sorte qu'elle ne permettrait pas certaines attaques obliques pour forer par exemple un canal oblique dans un bloc, ou encore pour réaliser des empreintes de forme générale étoilée au moyen d'une électrode de forme simple.

La présente invention vise à réaliser un dispositif simple et peu onéreux qui permette de réaliser

2                    0027084

notamment les travaux précités.

L'invention vise un dispositif d'usinage par électro-érosion, destiné à être monté entre un support d'une machine et une électrode d'usinage, et constitué d'au moins deux parties mobiles en translation latérale l'une par rapport à l'autre et reliées rigidement l'une au support et l'autre à l'électrode, ces deux parties étant solidaires l'une d'un écrou et l'autre d'une vis actionnée par un moteur et coopérant avec cet écrou pour permettre le mouvement de translation précité.

Suivant l'invention, le dispositif est caractérisé en ce que chacune des deux parties comprend un plateau fixé respectivement au support et à l'électrode, et un chariot orientable angulairement par rapport au plateau correspondant, ces chariots étant respectivement solidaires de la vis et de l'écrou.

Ainsi, on peut régler l'orientation de la vis par rapport au bâti de la machine en réglant l'orientation du chariot associé au support par rapport au plateau correspondant.

Contrairement à la table X-Y, le dispositif conforme à l'invention permet en outre de régler l'orientation de l'électrode, indépendamment de celle de la vis, autour d'un axe transversal aux plateaux. Pour cela, il suffit de régler l'orientation du plateau portant l'électrode par rapport à l'autre chariot.

Pour aviver une arête d'une empreinte à l'aide du dispositif conforme à l'invention, on règle l'orientation de la vis pour que la direction d'avance dirige l'arête de l'électrode vers l'arête à aviver et, comme ce réglage a aussi provoqué une rotation de l'électrode, on ramène l'électrode dans son orientation initiale en réglant angulairement le plateau qui la porte.

On actionne ensuite la vis, par le moteur, pour faire avancer l'électrode sous tension en direction de l'arête précitée jusqu'à obtention du résultat voulu.

Le dispositif conforme à l'invention permet encore d'usiner une pièce en plusieurs passes entre lesquelles on change l'orientation de la vis et/ou de l'électrode pour réaliser une empreinte de forme complexe avec précision.

Le dispositif conforme à l'invention, tout en étant plus simple qu'une table X-Y, permet, contrairement à cette dernière, de procéder à un réglage indépendant de de l'orientation de l'électrode et de celle de la vis par rapport au bâti de la machine.

D'autres particularités et avantages de la présente invention ressortiront encore de la description qui va suivre.

Aux dessins annexés, donnés à titre d'exemples non limitatifs :

- La Figure 1 est une vue en élévation latérale du dispositif conforme à l'invention;
- La Figure 2 est une vue en plan du dispositif de la Figure 1, vu du côté de l'électrode;
- La Figure 3 est une vue en coupe selon III-III de la Figure 2;
- La Figure 4 est une vue en coupe selon IV-IV de la Figure 3; et
- Les Figures 5 à 13 sont des vues montrant des exemples de réalisation d'empreintes diverses au moyen du dispositif conforme à l'invention.

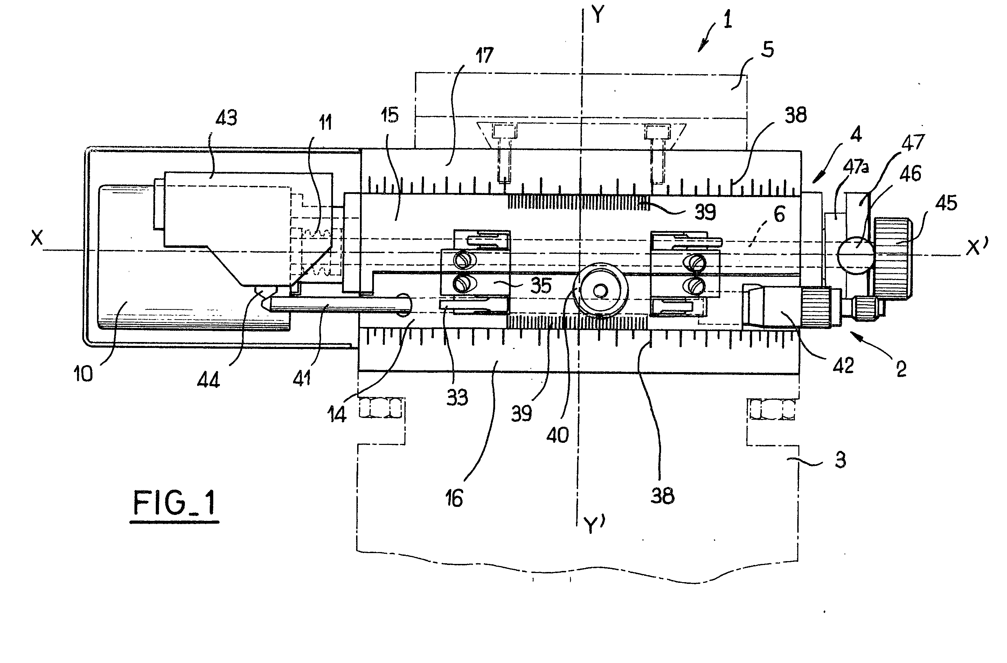

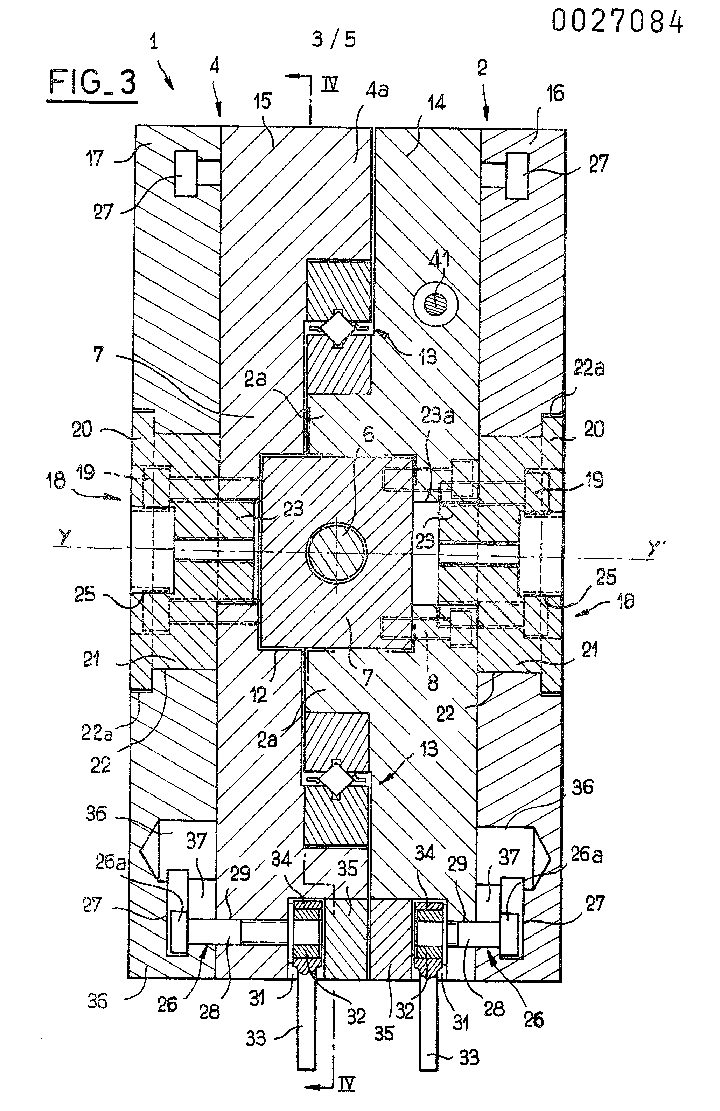

Comme le montrent les Figures 1 à 4, et notamment les Figures 1 et 3, le dispositif 1 comprend deux parties adjacentes, à savoir une partie 2 de fixation à une électrode 3 et une partie 4 de fixation à une tête d'usinage 5 d'une machine.

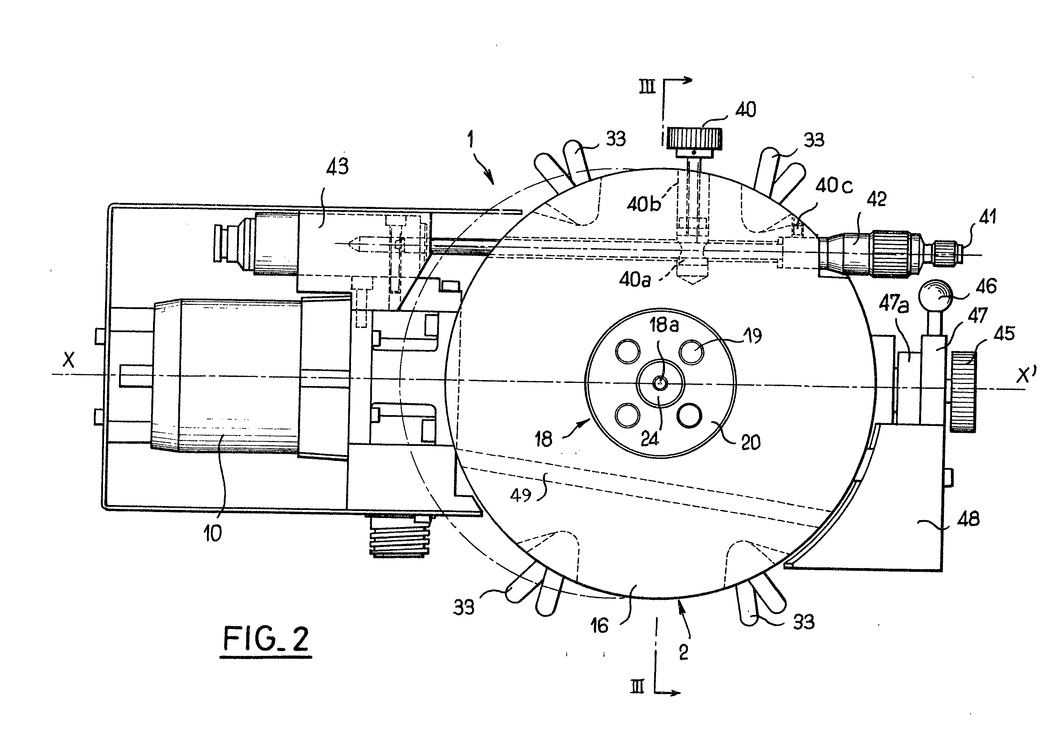

La partie 2 de fixation de l'électrode peut être décalée latéralement par rapport à la partie 4 par une translation de direction XX'; ainsi la partie 2 peut occuper une position dans laquelle elle est superposée à la partie 4, et une position dans laquelle elle est décalée relativement à cette dernière, comme représenté en trait mixte à la Figure 2.

La liaison mobile de la partie 4 et de la partie 2 comprend un système vis-écrou qui comprend une vis 6 montée en rotation dans la partie 4 selon un axe parallèle à la direction XX', et un écrou 7 assujetti à la partie 2 au moyen de vis de fixation 8.

La vis 6 est portée, et rigoureusement positionnée, dans la partie 4 au moyen de deux paliers à roulement 9a et 9b, dont l'un (9a) est double, assurant une butée axiale, situés de part et d'autre du filetage 6a de la vis 6.

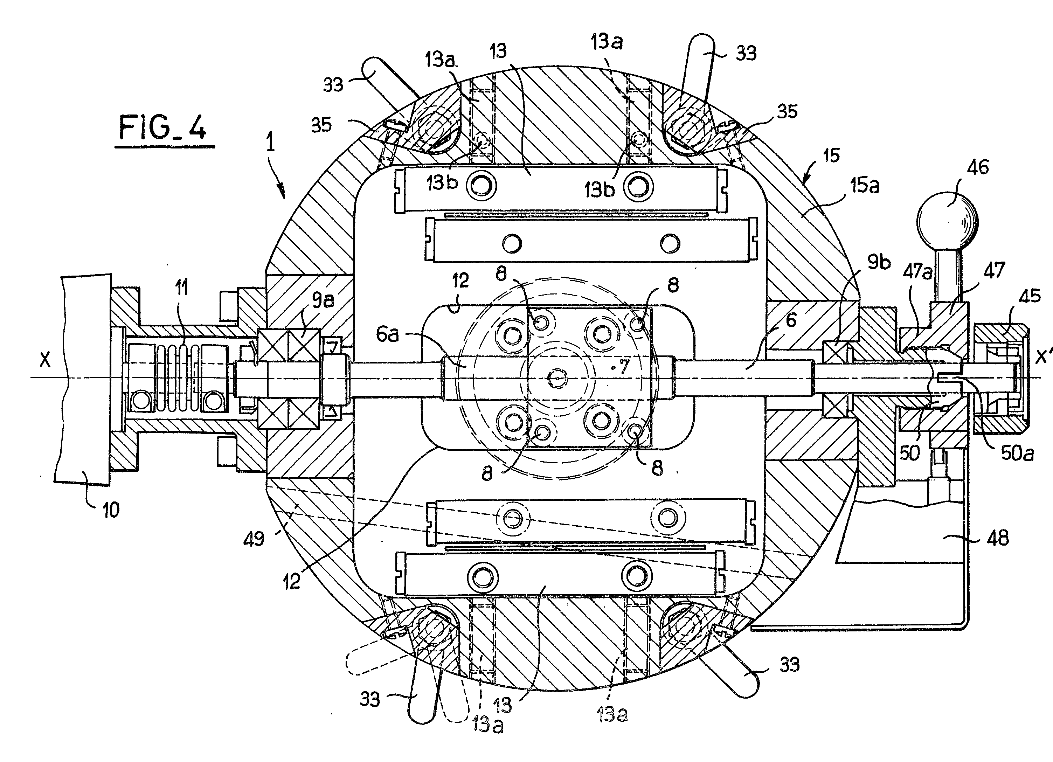

La vis 6 est en outre couplée à l'arbre de sortie d'un moteur 10 par l'intermédiaire d'un accouplement à soufflet 11 (Figure 4). Le moteur 10 est asservi de façon connue à la tension régnant en service entre l'électrode et la pièce à usiner (non représentée).

L'écrou 7, sensiblement parallélépipédique, peut se déplacer dans une cavité oblongue 12 (Figure 3 et 4) ménagée selon l'axe XX' dans la partie 4 au droit du filetage 6a.

La partie 4 présente une saillie périphérique 4a (Figure 3) dirigée vers la partie 2 tandis que cette dernière présente une saillie centrale 2a qui enveloppe latéralement l'écrou 7 (Figure 3).

La partie 4 est maintenue contre la partie 2 sans jeux ni frottement nuisibles au moyen de deux glissières à rouleaux croisés 13, de type connu, montées de chaque côté de la vis 6 entre les saillies 2a et 4a (Figure 3), et précontraintes par des vis transversales sans tête 13a (Figure 4) vissées dans la partie 4 et contre-bloquées par des vis 13b.

Conformément à l'invention, la partie 2 et la partie 4 comprennent chacune un chariot respectivement 14 ou 15, et un plateau respectivement 16 ou 17 monté en rotation par rapport au chariot 14 ou 15 correspondant selon un axe YY' perpendiculaire à XX'.

La partie 2 et la partie 4 sont reliées l'une à l'autre par l'intermédiaire de leurs chariots 14,15 grâce aux moyens décrits plus haut tandis que, en service, le plateau 16 de la partie 2 porte l'électrode 3 et l'autre plateau 17 est fixé à la tête d'usinage 5.

Les plateaux 16,17 sont des disques d'axe YY' parallèles entre eux, et aussi parallèles à l'axe de la vis 6, de part et d'autre de cette dernière.

Les plateaux 16,17 sont guidés en rotation et maintenus contre les chariots 14,15 correspondants au moyen de pièces de centrage 18 (ou cimblots) vissées à l'aide de vis 19 aux chariots 14,15 associés.

Les cimblots 18 comprennent une partie cylindrique 21 d'axe YY', ajustée dans un alésage 22 des plateaux 16,17, et un tablier circulaire 20, de même axe YY' que la jupe 21 et de diamètre supérieur à cette dernière, noyé dans un dégagement annulaire 22a de l'embouchure externe de l'alésage 22.

Chaque cimblot 18 est centré par rapport au chariot 14 ou 15 associé au moyen d'une partie cylindrique de centrage 23 coaxiale à la partie 21 et emboitée dans un alésage 23a des chariots 14,15.

Chaque plateau 16 ou 17 peut être bloqué en rotation par rapport au chariot 14 ou 15 associé au moyen d'une série de boulons 26 dont la tête 26a est engagée dans une gorge annulaire 27 à section en T qui débouche au pourtour de chaque plateau 16 ou 17 contre le chariot 14 ou 15 associé. Les têtes 26a sont carrées de façon à être immobilisées en rotation dans les gorges 27.

Les tiges 28 des boulons 26 traversent des alésages 29 qui sont répartis au pourtour des chariots

6   0027084

14, 15 au droit des gorges 27 et qui débouchent chacun
dans un logement ouvert latéralement 31 occupé par l'écrou
32 de l'un des boulons 26.

Ces écrous 32 sont associés à des manettes 33
qui font saillie latéralement des chariots 14 et 15 et
qui comprennent une tête 34 traversée par une ouverture
à douze pans emboîtée chacune sur l'un des écrous 32.

Des pièces de fermeture 35 vissées aux châssis
14, 15 séparent chaque logement 31 du châssis 14 ou 15
opposé tout en empêchant le démontage complet des écrous
32 et des manettes 33.

Ces dernières sont positionnées au montage par
rapport aux écrous 32 de façon que la fraction de tour
qu'elles peuvent faire dans les logements 31 suffise à
bloquer ou débloquer les plateaux 16, 17 par rapport
aux châssis 14, 15. Ainsi, les manoeuvres sont réduites
au minimum, et les boulons 26 une fois débloqués assurent
juste assez de liberté aux plateaux 16, 17 pour la rotation de ceux-ci.

Des trous borgnes 36 ménagés dans la face
interne des plateaux 16, 17 communiquent chacun, par un
fraisage 37, avec la gorge 27 pour permettre la mise en
place des boulons 26.

Les plateaux 16 et 17 portent sur leur surface
latérale des graduations en degrés (représentées de
façon schématique à la référence 38 de la Figure 1)
tandis que les chariots 14 et 15 portent un vernier 39
comprenant par exemple vingt divisions pour dix-neuf
degrés permettant de régler les orientations avec un
intervalle d'erreur de 3' d'angle.

Par ailleurs, le chariot 14 de l'embase 2 porte
un dispositif connu en soi pour couper l'alimentation du
moteur 10 quand la translation relative des chariots 14,
15 nécessaire à l'obtention de la cote précise d'usinage
voulue a été effectuée. Ce dispositif, généralement appelé "stop-cote" comprend un système de butée micrométrique constitué essentiellement d'une tige 41 montée longitudinalement dans un conduit du chariot 14 parallèlement à la vis 6, mobile selon la direction XX' et associée à un micromètre 42.

Le moteur 10 est associé à un micro-contact 43 dont l'organe sensible 44 est placé sur la trajectoire de l'extrémité de la tige 41.

En outre, une fois la tige 41 réglée, elle peut être fermement bloquée en translation au moyen d'une vis de freinage 40 (Figure 2) montée dans un alésage $40\underline{b}$ ménagé dans le chariot 14 transversalement à la tige 41, et vissée dans une noix cylindrique $40\underline{a}$ engagée à coulisse dans l'alésage $40\underline{b}$ et traversée par la tige 41.

Une vis sans tête $40\underline{c}$ vissée dans le chariot 14 permet en outre de bloquer le micromètre 42.

D'autre part, l'extrémité de la vis 6 opposée au moteur 10 est munie d'un bouton moleté 45 (Figure 4) permettant la manoeuvre manuelle de cette vis 6.

Cette extrémité de la vis 6 porte, en-deçà du bouton 45, une came 47 à laquelle est fixée une poignée de commande 46.

La came 47 porte, du côté du moteur 10, une douille $47\underline{a}$ d'axe XX', vissée autour d'un manchon 50 fixé au chariot 15 (ce qui assure simultanément le maintien du palier $9\underline{b}$) et rendu élastique en direction radiale par des fentes longitudinales $50\underline{a}$ débouchant en direction du bouton 45. Cette extrémité du manchon 50 et le fond de la douille $47\underline{a}$ présentent des conicités complémentaires constituant une pince.

D'autre part, la came 47 coopère, par son pourtour, avec l'organe sensible d'un micro-contact 48 pouvant couper l'alimentation du moteur 10 par l'intermédiaire de câbles (non représentés) passant par un conduit 49 ménagé dans le chariot 15 obliquement par rapport à la direction XX'.

L'ensemble est positionné de manière qu'en un quart de tour de serrage à l'aide de la poignée 46, par l'effet combiné du vissage de la douille 47a et des conicités précitées, le manchon 50 enserre et bloque la vis 6 et qu'en même temps le micro-contact 48 coupe l'alimentation du moteur 10, par mesure de sécurité.

Le dispositif comporte encore des contacts de fin de course non représentés.

Le dispositif 1 s'utilise de la façon suivante:

On commence par recaler la partie 2 sur la partie 4 en positionnant le micromètre 42 à zéro et en actionnant la vis 6 par le bouton 45 jusqu'à ce que la tige 41 enclenche l'organe sensible 44 du micro-contact 43. Puis on verrouille la vis au moyen de la poignée 46.

Ensuite, après avoir déserré en une fraction de tour les manettes 33, on règle l'orientation de la vis 6 autour de l'axe YY' en faisant tourner le chariot 15 par rapport au plateau 17 en s'aidant des graduations 38 et du vernier 39. Une fois ce réglage effectué, on resserre les manettes 33 du chariot 15.

On procède ensuite au réglage angulaire de l'électrode d'usinage autour de l'axe YY' en faisant tourner le plateau 16 relativement au chariot 14, en s'aidant des graduations 38 et du vernier 39 qu'il porte, à la suite de quoi on serre les manettes 33 du chariot 14.

On règle aussi la cote d'usinage en dévissant plus ou moins la tige 41 dans le micromètre 42 et on verrouille ce réglage à l'aide de la vis 40.

On procède ensuite à l'usinage proprement dit en débloquant la vis 6 par la poignée 46, ce qui autorise également l'alimentation du moteur 10. Ce dernier est asservi de manière à provoquer une avance de l'électrode qui maintienne constante la tension électrode-pièce à

9

0027084

usiner.

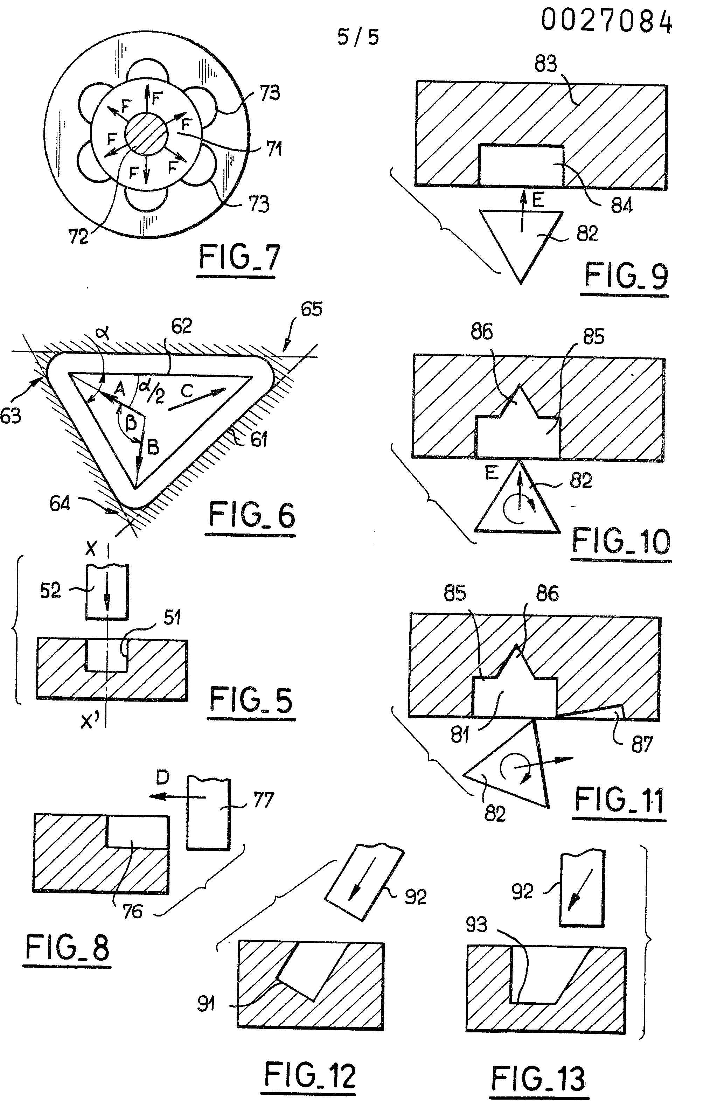

Les Figures 5 à 13 illustrent certaines des possibilités d'usinage qu'offre le dispositif conforme à l'invention.

Comme le montre la Figure 5, le dispositif 1 décrit plus haut permet de réaliser une empreinte 51 de section quelconque, à l'aide d'une électrode 52 de même section. Dans l'exemple représenté, le dispositif 1 est monté sur la tête d'usinage de manière que les plateaux 16, 17 soient verticaux. Ce montage est possible en interposant une équerre (non représentée) entre la tête et le plateau 17. On a en outre mis la vis 6 en orientation verticale en réglant le chariot 15 par rapport au plateau 17, et l'électrode 52 en position également verticale en réglant le plateau 16 par rapport au chariot 14. Ces réglages sont faits avec précision grâce aux verniers 39.

Dans l'exemple représenté à la Figure 6, on a réalisé, par un défonçage préalable de la manière exposée ci-dessus,une empreinte prismatique 61 de section triangulaire en déplaçant longitudinalement l'électrode 62 de section semblable. On a ensuite exécuté une opération de finition en animant l'électrode d'un mouvement transversal de translation circulaire. Il s'ensuit que les arêtes 63, 64, 65 de l'empreinte 61 sont arrondies. Pour les aviver, le dispositif 1 étant supposé préalablement monté sur la tête d'usinage de façon que les plateaux 16, 17 soient horizontaux, on règle l'orientation de la vis 6 selon la direction A qui est la bissectrice de l'angle associé à l'arête 63 en manoeuvrant le plateau 17, et on règle le plateau 16 pour que les faces de l'électrode 62 soient parallèles à celle de l'empreinte 61. Après avoir réglé avec précision la course à parcourir à l'aide de la butée micrométrique 41, 42, on usine dans la direction de la flèche A.

Pour aviver les autres arêtes, par exemple l'arête 64 dont la bissectrice est séparée de celle de l'arête 63 par un angle β, le réglage du dispositif est alors très simple puisqu'il suffit de faire tourner le chariot 15 de l'angle β par rapport au plateau 17, et de ramener le plateau 16 de l'angle-β pour remettre l'électrode 62 parallèle à elle-même.

L'arête 65 est ensuite avivée selon un procédé analogue.

Comme le montre la Figure 7, le dispositif 1 permet de réaliser une empreinte 71 cylindrique alvéolée de forme complexe à l'aide d'une électrode cylindrique 72 très simple.

Pour cela, après avoir réalisé par un défonçage préalable une empreinte cylindrique simple, les plateaux 16, 17 étant montés horizontaux, et l'électrode 72 fixée verticalement au plateau 16, on effectue plusieurs passes en attaque latérale, en orientant chaque fois la vis 6 pour diriger l'électrode 72, selon l'une des flèches F, vers l'une des alvéoles 73 à réaliser.

Dans l'exemple représenté à la Figure 8, on réalise à l'aide du dispositif 1 une empreinte 76 à l'aide d'une électrode 77 montée verticalement et se déplaçant latéralement selon une flèche D. Dans ce cas, les plateaux 16, 17 peuvent indifféremment être horizontaux ou verticaux.

L'empreinte 76 constitue un évidement latéral dont la forme résulte de la forme de l'électrode 77, de son orientation et de la direction d'usinage D.

Comme illustré aux Figures 9 à 11, l'attaque latérale de la Figure 8 peut être effectuée en plusieurs passes pour réaliser un évidement de forme complexe 81 (Figure 11) à l'aide d'une électrode 82 de forme élémentaire, par exemple prismatique à section triangulaire.

Entre deux passes, on peut changer l'orientation de l'électrode 82 sans changer celle de la vis 6 de sorte que la direction d'avance E est la même, comme le montre la comparaison des deux étapes successives illustrées respectivement aux Figures 9 et 10.

A la Figure 9, on a en effet réalisé une attaque latérale selon la direction E de la pièce à usiner 83, l'électrode 82 étant verticale et orientée de façon que l'une de ses faces soit parallèle à la face attaquée de la pièce 83. On a ainsi réalisé une empreinte parallélépipédique 84. A la Figure 10, on a ramené en arrière l'électrode 82 à l'aide du bouton 45, fait tourner l'électrode 82 de 60° par réglage du plateau 16 relativement au chariot 15, de façon que l'électrode 82 présente une arête 85 en regard de la pièce 83, et procédé à une nouvelle attaque latérale dans la direction E inchangée. L'empreinte obtenue 85 présente le profil de l'empreinte 84 auquel s'ajoute une avancée de section pointue 86.

Entre deux passes, on peut en outre changer la direction de la vis 6, et donc la direction d'avance, après quoi on peut ramener l'électrode 82 parallèle à elle-même, ou même l'orienter indépendamment de la vis 6, comme le montre la comparaison des deux étapes successives illustrées aux Figures 10 et 11.

Dans l'étape de la Figure 11, on a en effet fait tourner la vis 6 par exemple de 80° en réglant l'orientation du chariot 15 par rapport au plateau 17. On a ensuite fait tourner l'électrode 82 de 45° dans le même sens . L'usinage dans ces conditions permet de réaliser une cavité auxiliaire 87 à côté de l'empreinte 84.

Comme le montrent les Figures 12 et 13, les plateaux 16 et 17 étant verticaux et la vis 6 oblique, on peut réaliser un puits oblique 91 si l'électrode 92 est inclinée de même (Figure 12) ou un évidement évasé 93

12

0027084

si l'électrode 92 est verticale (Figure 13).

Tous ces exemples, nullement limitatifs, montrent bien la diversité des empreintes que le dispositif conforme à l'invention, de structure très simple, permet de réaliser à l'aide d'électrodes de forme également très simple.

Bien entendu, l'invention n'est pas limitée aux exemples décrits et de nombreux aménagements peuvent être apportés à ces exemples sans sortir de son cadre.

C'est ainsi en particulier que le système de verrouillage des réglages d'orientation, qui comprend le boulon 25 et les gorges 27 pourrait être remplacé par tout système approprié.

13

0027084

<u>REVENDICATIONS</u>

1. Dispositif d'usinage par électro-érosion, destiné à être monté entre un support d'une machine et une électrode d'usinage, et constitué d'au moins deux parties mobiles en translation latérale l'une par rapport à l'autre et reliées rigidement l'une à la machine et l'autre à l'électrode, ces deux parties étant solidaires l'une d'un écrou et l'autre d'une vis actionnée par un moteur et coopérant avec cet écrou pour permettre le mouvement de translation précité, caractérisé en ce que chacune des deux parties comprend un plateau fixé respectivement à la machine et à l'électrode et un chariot orientable angulairement par rapport au plateau correspondant, ces chariots étant respectivement solidaires de la vis et de l'écrou.

2. Dispositif conforme à la revendication 1, caractérisé en ce que chaque chariot coopère avec le plateau correspondant par l'intermédiaire d'une pièce de centrage.

3. Dispositif conforme à l'une des revendications 1 ou 2, caractérisé en ce que chaque chariot est solidarisé avec le plateau correspondant par un certain nombre de boulons périphériques munis d'écrous de blocage, les têtes des boulons étant logées dans une gorge périphérique pour permettre la rotation du chariot par rapport au plateau.

4. Dispositif conforme à l'une des revendications 1 à 3, caractérisé en ce qu'il comprend des moyens à commande manuelle pour bloquer la rotation de la vis.

5. Dispositif conforme à la revendication 4, caractérisé en ce que les moyens de blocage de la vis comprennent des moyens pour couper l'alimentation du moteur en position de blocage de la vis.

0027084

FIG_1

FIG.2

0027084

FIG_3

0027084

FIG_4

0027084

FIG_7

FIG_9

FIG_6

FIG_10

FIG_5

FIG_11

FIG_8

FIG_12

FIG_13

# RAPPORT DE RECHERCHE EUROPEENNE

**0027084**

Numéro de la demande

Office européen
des brevets

EP 80 40 1403

| | DOCUMENTS CONSIDERES COMME PERTINENTS | | | CLASSEMENT DE LA DEMANDE (Int. Cl. ³) |
|---|---|---|---|---|
| Catégorie | Citation du document avec indication, en cas de besoin, des parties pertinentes | Revendication concernee | | |
| A | US - A - 3 806 691 (CAMMANN MANUF.) <br> * Colonne 3, ligne 10 - colonne 4, ligne 12 * <br><br> -- | 1 | | B 23 P 1/12 |
| A | FR - A - 2 290 274 (DITZEL) <br> * Revendication 1 * <br><br> ---- | 3 | | |

**DOMAINES TECHNIQUES RECHERCHES (Int. Cl. ³)**

B 23 P 1/12
B 23 Q 1/14

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons

&: membre de la même famille,
document correspondant

Le présent rapport de recherche a été établi pour toutes les revendications

| Lieu de la recherche | Date d'achevement de la recherche | Examinateur |
|---|---|---|
| La Haye | 06-01-1981 | DAILLOUX |

OEB Form 1503.1 06.78